# EUROPEAN PATENT SPECIFICATION

(11) **EP 1 271 994 B1**
(45) Date of publication and mention of the grant of the patent: **16.08.2006**
(21) Application number: 02250067.2
(22) Date of filing: 07.01.2002
(51) Int. Cl.: H04Q 11/00

(54) **Advanced signaling system for switching and control in integrated optical networks**
Fortgeschrittenes Signalisierungssystem zum Vermittlung und Steuerung in Optischen Integrierten Netzen
Système de signalisation avancée pour commutation et contrôle dans les réseaux optiques intégrés

(30) Priority: 29.06.2001 US 895948
(43) Date of publication of application: 02.01.2003
(73) Proprietor: LUCENT TECHNOLOGIES INC., Murray Hill, New Jersey 07974-0636 (US)
(72) Inventor: Erfani, Shervi N., Red Bank, New Jersey 07701 (US); Lawrence, Victor B., Holmdel, New Jersey 07733 (US); Sohraby, Kazem A., Lincroft, New Jersey 07738 (US)
(74) Representative: Sarup, David Alexander

(56) References cited:
- WEI J Y ET AL: "Network control and management of a reconfigurable WDM network" MILITARY COMMUNICATIONS CONFERENCE, 1996. MILCOM '96, CONFERENCE PROCEEDINGS, IEEE MCLEAN, VA, USA 21-24 OCT. 1996, NEW YORK, NY, USA,IEEE, US, 21 October 1996 (1996-10-21), pages 581-586, XP010203919 ISBN: 0-7803-3682-8
- COPLEY A: "OPTICAL DOMAIN SERVICE INTERCONNECT (ODSI): DEFINING MECHANISMS FORENABLING ON-DEMAND HIGH-SPEED CAPACITY FROM THE OPTICAL DOMAIN" IEEE COMMUNICATIONS MAGAZINE, IEEE SERVICE CENTER. PISCATAWAY, N.J, US, vol. 38, no. 10, October 2000 (2000-10), pages 168-174, XP000969740 ISSN: 0163-6804
- ALI KAFEL ET AL: "The intelligent edge:Facilitating network convergence" TELEPHONY, [Online] XP002213606 Retrieved from the Internet: <URL:http://www.telica.com/news/intelligen t_edge.pdf> [retrieved on 2002-09-16]

## Description

### FIELD OF THE INVENTION

The present invention relates generally to call control and signaling systems for telecommunication networks and more particularly to call control and signaling systems employed in integrated optical networks.

### BACKGROUND OF THE INVENTION

Optical cross-connects (OXC) are moving towards switching of individual wavelengths using signaling techniques, such as MPLS (Multiprotocol Label Switch), GMPLS (Generalized MPLS), MplamdaS (Multiprotocol lamda Switch), etc. Current OXCs are capable of switching an entire set of wavelengths from one optical cable to another. An example of such technology is the Lamda router, manufactured by Lucent Technologies of Murray Hill, NJ, which utilizes MEMs (micro-electromechanical) technology to control miniature mirrors to direct the various optical signals entering the device. A 1XK switch of this nature is capable of switching individual wavelengths.

Optical add/drop multiplexers (OADMs) include both electronic and optical interfaces. OADMs receive slower electronic signals at the electronic interface and multiplex incoming electronic signals into outgoing optical signals for transport over rings or mesh networks. The reverse occurs in order to drop electronic signals at a premises.

For on-premises access, electronic signals can be carried to the nearest OADM and then transported over optical channels. At each OADM, the signal that is dropped from the wavelength is demultiplexed from the incoming wavelength, and dropped at the electronic port of the OADM. At the OXC, the cross-connect can be reconfigured so that depending on the destination OADMs, the specific wavelength is routed to the proper destination. Local traffic (usually electronic) can enter the OADM via a circuit switch, or can be an optical signal coming from a SONET/SDH formatted data stream. It may also be in optical form carrying IP over WDM, etc. Separate OADM and OXC boxes result in management and maintenance issues larger than a combined OADM-OXC box.

Current switching systems support one or more fabric types (e.g., circuit, packet, lamda, etc.), in integrated or in separate switching systems. A recent technological development termed, "Softswitch", moves the signaling interface out of the switch and keeps the fabric as well as minimal (generic) processing inside the gateway/switch at the edge of the network. This results in multi-fabric switching support

Softswitch currently allows the signaling from circuit switch (e.g., SS7), H323, SIP, or others at the (ingress) source to command routing of traffic from the terminating trunks at the source gateway to an egress switch, possibly through an egress Softswitch.
The ingress traffic, such as voice, may be carried on an IP network. This capability reduces cost of traffic transport as a result of statistical multiplexing. It also allows combining and providing new features and capabilities, as well as support of multiple switching fabrics. End users, through signaling interaction between gateway and the Softswitch are able to benefit from additional features, which are otherwise expensive (or require long development cycles) to implement.

In many networking configurations, it would be cost effective to combine OXC and OADM in one box so that the task of multiplexing/demultiplexing and lamda routing can occur at the same point in the network. The OXCs would need to be made smaller in order to cost effectively serve large business sites. That is, larger customer sites would prefer to utilize the optical network as close as possible to their premises. This could increase reliability for end-end services, improve performance, make network control for QoS available at the network edge t the end user service providers, and reduces overall cost of service, due to fewer components involved in traffic handling.

The current Softswitch provides signaling and routing for the electronic switches (and IP end points) for traffic transport over a backbone. Switching of wavelengths at the OXC would take place through the OXC controller and consists of assigning wavelengths to a different cable, etc. based on some routing rule. Furthermore, multiplexing/demultiplexing at OADM devices currently takes place under the OADM processor/controller. With the expansion of optical transport, service providers want more control over the reconfiguration of optical networks and the interaction and access of electronic networks to the optical components.

Separate control and management of OXC, OADM, and switching gear in the network can result in cost inefficiencies due to multiple processing, switching, and signaling points, as well as their management and complicated control and possibly inconsistent controls among them. Additional inefficiencies are due to multiple traffic processing points, such as grooming, multiplexing/demultiplexing, etc. at various points inside the network. Due to multiple systems a complicated and expensive network management is necessary and reliability also suffers.

Accordingly, there is a need to provide a signaling platform that is independent of the electronics and optical switching and transmission systems whereby transport network resources can be allocated in a dynamic and efficient fashion over all types of networks including optical transports.

Wei, J Y et al: "Network control and management of a reconfigurable WDM network" Military Communications Conference, 1996. MILCOM '96, Conference Proceedings, IEEE Mclean, VA, USA 21-24 Oct. 1996, New York, NY, USA, IEEE, US, 21 October 1996 (1996-10-21), pages 581-586, XP010203919 ISBN: 0-7803-3682-8, discloses an architecture for a reconfigurable WDM network control and management system. The system was implemented over a distributed platform.

Copley A: "Optical Domain Service Interconnect (ODSI): Defining Mechanisms for Enabling On-Demand High-Speed Capacity from the Optical Domain" IEEE Communications Magazine, IEEE Service Center. Piscataway, N.J, US, vol. 38, no. 10, October 2000 (2000-10), pages 168-174, XP000969740 ISSN: 0163-6804; discloses a signaling and control mechanism for use at the elctro-optical boundary of an intelligent optical switched network. The mechanism could allow edge network elements to establish optical paths in real time.

### Summary of the Invention

A system according to the invention is as set out in claim 1. Preferred forms are set out in the dependent claims.

The present invention is an enhanced signaling system (ESS) that provides a signaling platform that is independent of the electronics and optical switching and transmission systems. The invention provides controllability on an end-end basis to a concatenation of optical and electronic systems by the service providers and end users. Since the present invention enables control over the transport network resources by the end user and service providers, it accelerates the process of service creation and network service expansion. By providing end-end control over the connection, it allows total control of service requirements and QoS. Accordingly, service providers can allocate transport network resources in a dynamic fashion independent of other network users (when dedicated wavelengths and resources are allocated), or in conjunction with other users when sharing of transport wavelengths is allowed. By isolating the signaling and transport mechanisms and by providing fabric-independent resource allocation mechanisms, the ESS offers control over end-end resources in a cost effective manner over very short period of time.

In one exemplary embodiment of the invention, an apparatus for providing signaling for switching and control of transmissions in an integrated optical network includes a plurality of electrical signaling interfaces for receiving requests from external signaling networks and a processing module for processing the requests from the external signaling networks. At least one optical signaling interface is included for coupling to optical components in the integrated optical network. The optical signaling interface is operable to transmit processed requests from the processing module for assignment of optical channels for the optical components.

### BRIEF DESCRIPTION OF THE DRAWINGS

A more complete understanding of the present invention may be obtained from consideration of the following detailed description of the invention in conjunction with the drawing, with like elements referenced with like references, in which:
FIG. 1 is an exemplary embodiment of a prior art telecommunications network;
FIG. 2 is an exemplary embodiment of a telecommunications network employing the advanced signaling system or ESS for switching and control in integrated optical networks according to the present invention;
FIG. 3 is an exemplary functional block diagram of the advanced signaling system in accordance with the present invention; and
FIG. 4 illustrates an exemplary SS7 call flow using the advanced signaling system of the present invention.

### DETAILED DESCRIPTION

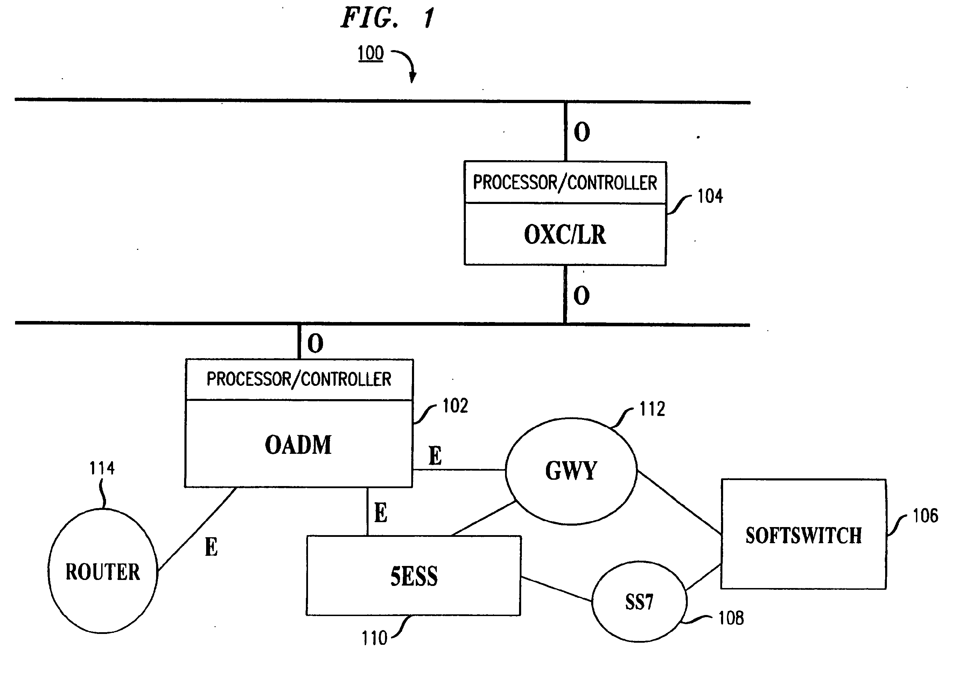

Referring to Fig. 1, there is shown an exemplary representation of a prior art optical network 100 utilizing optical add drop multiplexers (OADMs)102 and optical cross-connects (OXCs) 104. The network includes a current implementation of a softswitch signaling mechanism 106 for fabric independent switching. As shown, the softswitch provides signaling and call control information via an SS7 signaling protocol controller 108 which in turn couples to a 5ESS switch 110. The softswitch 106 may also couple to a media gateway 112 which in turn couples to the SESS 110 or directly to the optical network via the OADM 102. The OADM 102 may also couple to one or more routers 114 as shown. Within the optical network, e.g., a SONET ring or other configuration, the OADMs 102 couple to OXCs 104 as needed, such as a lamda router. As can be seen all of the connections from the OADM 102 to the router 114, SESS 110 or gateway 112 are accomplished via electrical interfaces (labeled "E"). Thus, currently a softswitch does not have direct control as to provisioning or signaling in the optical network and all provisioning/signaling for the optical network is accomplished separately, but possibly in conjunction with the electrical network, through other means, such as use of an Optical Network Navigator (ONN) and or Optical System Manager (OSM), etc., provided by Lucent Technologies.

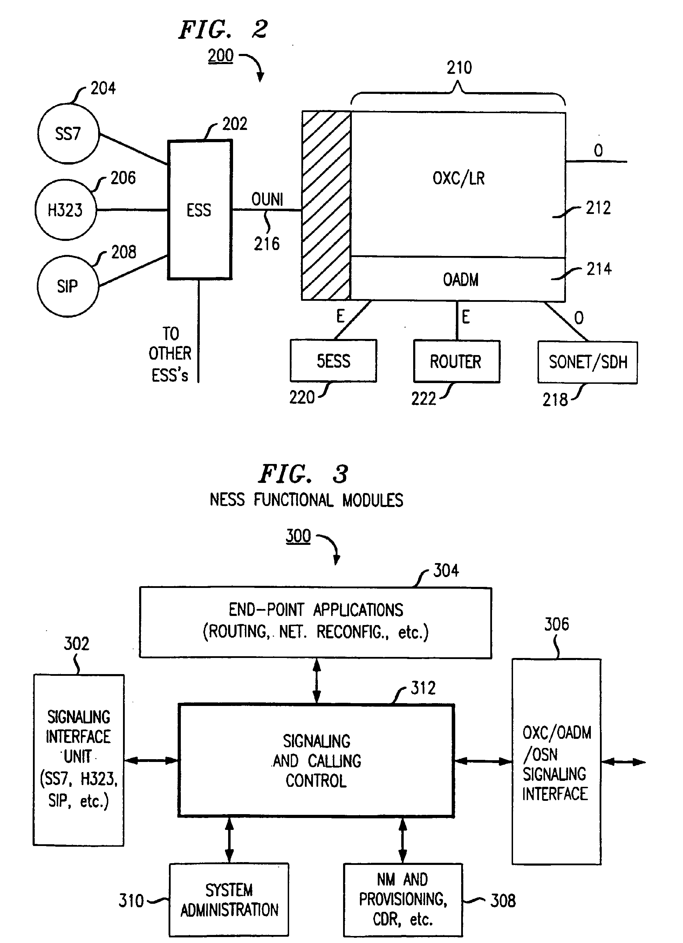

Referring to Fig. 2, there is shown one exemplary embodiment of a network configuration 200 including an enhanced signaling system (ESS) 202 according to the present invention. As shown, the enhanced signaling system (ESS) of the present invention accepts signaling messages from a number of different signaling controllers including circuit switch (e.g., SS7) 204, H.323 206, SIP 208, for example as well as other forms of signaling including optical network signaling through an Optical User Network Interface (OUNI) or other protocols. The interface communicates directly with an optical service node (OSN) 210 (which may include an OXC/OADM combination 212, 214 or separate components) via an optical user network interface (OUNI) 216. The optical service node (OSN) 210 couples directly to an optical network 218, for example a SONET/SDH configuration via optical connections. The OADM 214 which as explained is included as part of the optical service node 210 includes traditional electrical endpoint connections to circuit switches (e.g., 5ESS) 220, packet switches 222, such as routers and other like devices. As will be explained in greater detail, an advantage of the present invention is that signaling can be accomplished by way of optical interfaces that couple directly to the respective optical components in the optical service node 210 such as the OXC 212 and OADM 214 rather than having the signaling always being accomplished through electrical connections as was the case in the prior art. The ESS may also interact with other ESSs in the network using either proprietary protocols or a variation of OUNI that is applicable for this purpose.

The present invention signaling system includes various electrical and optical interfaces similar to AM [???] 16 GBE (Gigabit Ethernet). These interfaces may include, for example, Ethernet (10Mbps/100Mbps/1Gbps/ 10Gbps, etc.), T1/E1, SONET/SDH at different rates, E3/T3 (DS3), and clear WDM (where no particular format such as SONET/SDH may be recognized). Interfaces to the ESS, for signaling, such as for wavelength set up, removal, mapping of electrical and optical channels, and network management features are also included.

The optical user network interface (OUNI) 216 can be the standard signaling interface between the ESS and the optical system. The ESS receives requests from the external signaling networks (SS7, H323, SIP, etc.) and generates the corresponding OUNI messages towards the optical network (e.g., LamdaRouter, OXC, etc.) Other signaling interfaces (than OUNI) may also be available. This is analogous to use by the traditional softswitch using IPDC Internet Protocol Device Control or H248 for signaling to the gateway. See: Signaling Requirements at the Optical UNI (ietf.org; draft-bala-mpls-optical-uni-signafing-01.txt for example)

As discussed earlier, the present invention is advantageous in that control of network configuration and assignment of calls to optical channels moves to the network edge. Currently control at the network edge is limited to the electronic space. ILECs, LECs, CLECs, and all Carriers, in general, desire to have total control over their network, in both optical and electronic domains in an integrated manner. In this way, there is a higher level of control by the end users and end devices on electronic call assignment and control in conjunction with the optical transport which results in the ability to introduce new classes of service by the service and network providers. In addition, the present invention provides for reduced cost of traffic transport due to fewer occurrences of multiplexing, regeneration, network management, provisioning, and signaling. Another added benefit is higher end-end reliability and improved network performance due to fewer network components. Over time, this results in further reduction of network equipment and cost, thus, improving network economy.

As discussed, the ESS includes both electronic and optical interfaces. The electronic interface is for the TDM, IP, ATM, and other electronic interfaces such as those on the OXC/OADM, and the multiplexing of electronic signals onto the wavelengths. Existing signaling types such as SS7, H323, SIP, etc. are also incorporated. For multiplexing of electronic signals onto the optical wavelengths, the ESS-OXC interface requires signaling as well. The following classes of signaling messages are supported: call establishment/de-establishment, such as for inbound, outbound, call set up, passthrough calls; call clearing; state inquiry and state setting commands, tests (for calls and channels); and miscellaneous functions, such as, heart beat, network management, provisioning, tunneling, etc.

The optical interface is for command of the re-configuration and routing of the optical wavelengths, and demultiplexing of electronic signals from a wavelength. An external signaling interface to MPLS/GMPLS systems may also be provided. For demultiplexing of signals from the optical channel and assignment to the electrical interfaces signaling is also required. More specifically, the optical interface provides signaling for assignment of optical interface channels (such as on OXC and/or OADM) to the various electrical channels. The optical interface includes commands for demultiplexing of optical signals, and routing of wavelength from one optical domain port to another. In addition to the electronic interface signals discussed above, the following may also be included: wavelengths assignment from one port to another (e.g., passthrough), re-assignment of an electrical signal currently riding in an optical channel to another optical channel and state signals, tests, and functions in optical domain.

With regard to utilization of the interfaces discussed above, the ESS provides a number of different signaling options such as inbound call setup messages, and passthrough set up messages, as examples. Inbound call setup messages are initiated by the calling party. These include a phone number or IP-like address of an end point. The routing decision is made at the ESS regarding how to route the call. Some of the contents of this message are: called party address, calling party address, incoming port/channel address and outgoing port/channel address. The incoming and outgoing port/channel addresses can be for optical or electronic endpoints and may include architecture specific element addresses.

A passthrough setup message is initiated for an OXC/OADM. This type of message commands the receiving device to connect a wavelength or set of wavelengths from an input (optical) port to an output (optical) port. A passthrough message may include content, such as, a called party address; incoming port/channel address, outgoing port/channel address, incoming wavelength ID, outgoing wavelength ID, and information regarding channel error testing (activate/deactivate, what to measure, interval of measurement). As with the inbound call setup message, the incoming and outgoing port/channel addresses can be optic or electronic and may include architecture specific element addresses.

For each optical and/or electronic call, after call completion, call statistics information (including but not limited to total packet count, count of packet loss, packet delay, jitter, etc.) is reported by the electronic interface at the OSN to the ESS. In the present invention, the ESS compiles the call information and uses appropriate algorithms for CAC, call routing/rerouting and network reconfiguration, for the new calls, in conjunction with external databases, processors and controllers (e.g., OSM, OSN, etc.).

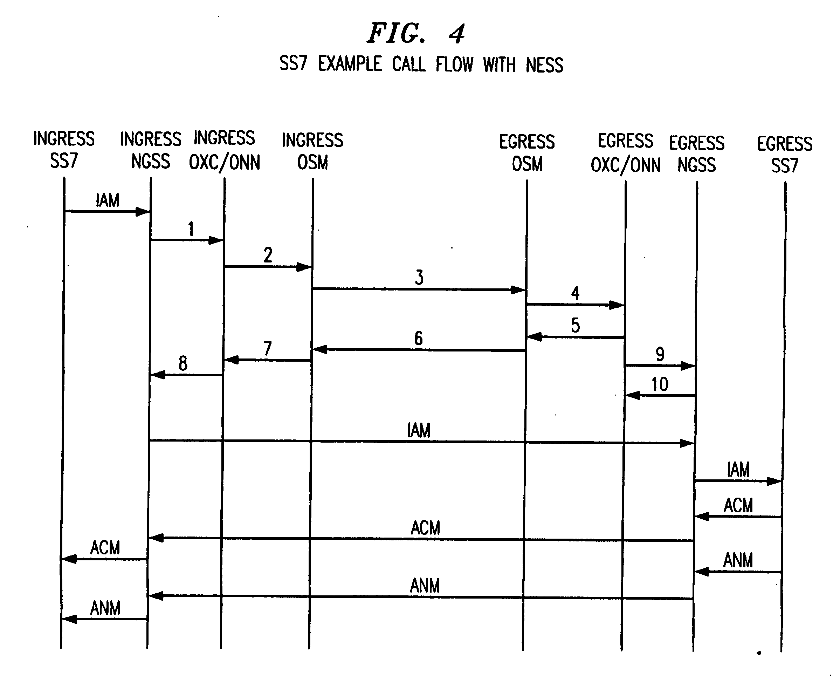

A high level example of call setup based on QoS measurements of optical and electronic channels at the ESS is as follows. Before an individual call is established, a decision is made as to which optical channel will satisfy given QoS requirements. This decision is made in conjunction with the egress node at which the call will be terminated. The selection process also takes into account the wavelengths changes and possible OEO/EOE conversions that may take place between ingress and egress nodes. Referring to Fig. 3, a functional block diagram for one embodiment of the ESS 300 of the present invention is shown. As shown, the ESS 300 includes a signaling interface module 302, a signaling and end-point applications module 304, an OXC/OADM/OSN signaling interface 306, a network management and provisioning module 308 and a system administration module 310. Each of the above modules couples to a signaling and call control module 312. Each of the modules is discussed in greater detail below.

The signaling interface unit 302 interfaces to external signaling systems and end points such as SS7. Specific interactions to external signaling and switching systems such as ISUP Automatic Congestion Control are also located in this module, although such a function can also be distributed across the signaling and call control and signaling interface unit. For end points such as ISDN which signaling requires termination of a D channel, such terminations also occur at this module. The signaling interface unit 302 interacts with the signaling and control module 312 for call assignment, congestion and overload notification, and resource allocation commands. The internal interaction takes place over a high speed media with APIs designed for this purpose.

The network management and provisioning module 308 provides network management interaction for reporting of alarms and receiving commands for provisioning and reconfiguration of the ESS. It also interacts with the network operators and Craft, and systems that collect call records, status, and alarm information. Downloads of updates to the ESS are accomplished through this module. This module interacts with the signaling and call control module 312, and possibly to other system modules for reporting and data collection purposes.

The signaling and end-point applications module 304 handles electronic and optical routing algorithms and decision processes for channel allocation. This module interacts with the external databases and proxies (such as gate-keepers) for the purpose of translation and determination of the address of end points and routes. In case of alarms and/or commands indicating channel failure, the signaling and end-point applications module 304 contains the alternate route decision process and list of alternate routes. The module interacts with the signaling and call control module 312 during call establishment, and to network management and provisioning module 308 for updates. Specific end-user applications and end-user programming interfaces are also handled by this module. End-user specific applications such as those encompassed by Intelligent Network (NI) architectures are included in the module 304.

The OXC/OADM/OSN signaling interface 306, or optical signaling interface, is similar to an IPDC protocol handler (Internet Protocol Device Controller), such as that found in the current Softswitch. The optical interface 306 receives the call commands from the signaling and call control module 312 regarding individual optical or electronics channels and interacts with the OXC/OADM, and/or OSN for establishment of individual calls and/or channels across networks. The optical signaling module 306 also receives alarms and status information from the network for established channels and forwards them to the signaling and call control 312, signaling and end-point applications 304, and network management and provisioning modules 308 for decisions regarding call admission control, QoS monitoring, and other call related attributes. The interaction between this module and the others in the ESS is through internal ESS inter-board/module protocols and specific APIs.

The system administration module 310 is responsible for the operator interface for administration and maintenance. It connects to a Craft terminal for manual intervention such as setting of thresholds, call gap parameters for congestion control, and switch-over operation under failure conditions, if necessary.

The signaling and call control module 312 is the heart of the ESS and is responsible for signaling intelligence and call processing. All incoming signals from the external systems are processed by this module. For individual call routing, number translation, and signaling, the signaling and call control module 312 accesses the signaling and end-point applications module 304, as well as other external systems such as proxies and gatekeepers. The call/channel establishment through OXC/OADM/OSN is commanded by this module through the OXC/OADM/OSN signaling interface module 306.

The ESS functions in connection with other modules that are not included within the ESS. Two such functional modules are the Optical Service Manager (OSM) and Optical Network Navigator (ONN) provided by Lucent Technologies (not shown). The OSM provides state of the art network management that enables VPN support, bandwidth brokering, and an interface to the billing systems. These features are deemed necessary to support integration of further intelligence into the all-optical networks. The OSM makes physical and logical topology of the network available to the service providers, by providing visualization of the network elements and circuits. The OSM also enables "end-customer-centric" network management, such as for "Real Private Network", where service providers manage the network resources based on policy as per business needs and support of Differentiated Optical Services (DOS) through validation of Service Level Agreements (SLA).

The OSM provides Element Management, Network Management, and Service Management functions for the optical network. In doing so, it also interacts with an optical network navigator (ONN) which is resident on the network element (such as an OXC) for service creation and restoration. It ensures network reliability and integrity by providing network restoration through ONN and alarm surveillance. In conjunction with the OUNI, the OSM provides authentication and policy validation services for the ONN. The OSM furthermore provides centralized service provisioning with distributed routing through ONNS, SLA, support of optical RPN, policy management, and user programmable APIs. These are viewed as valued-added services that can differentiate the service providers who utilize ESSs from their competitors.

An ONN is resident in the Lucent LamdaRouter switch as its control element. It is designed to facilitate and speed up the process of provisioning by the service providers as well as to allow restoration of the underlying optical network. Three basic functions provided by ONN are: automatic discovery of optical network topology, automatic end-end provisioning of service connections and Automatic service restoration in the event of network faults, at multiple levels depending on customer willingness-to-pay.

The ONN specifically addresses the core optical network requirements for wavelength provisioning, and restoration. It is based on a distributed network-wide control plane and adopts the IP-centric protocols for effective restoration, and engineering capabilities in the optical network in order to meet transport optical needs. The system incorporates the features needed for interaction among the Lucent Technologies' LamdaRouters inside the optical network (distributed intelligence) as well as protocols that are used for interface to the optical network by the client entities through OUNI. The Optical User Network Interface (OUNI) allows the edge device, such as a router, to send requests directly to the connected LamdaRouter in order for it to request a connection though the optical network to another edge device such as another router. Interaction among LamdaRouters is by using the Optical Network Signaling Protocol (ONSP) provided by Lucent Technologies, which enables coordination between the distributed intelligence that is resident at various LamdaRouters. The backbone of the ONN system is a set of algorithms that in conjunction with its signaling protocols allow simplified provisioning, through fast and intelligent algorithms across an all optical network. These same algorithms can also be used to determine the protection paths in case of the primary path failure. Shared protection capability which is inherent in mesh networks, will allow the traffic from one or multiple failed paths to be served by a single protection path, thus resulting in further efficiency in utilizing network resources. ONN supported protocols include automatic recognition and discovery of LamdaRouters in the network in case of insertion of a new one or in general for discovery of the paths across the nodes. Network routing among LamdaRouters' ONN are disseminated using the OSPF-based link state protocol.

### ESS Functionality

In an exemplary illustration of ESS functionality, call set up signaling from an ingress end point (such as upon receiving an IAM from SS7 for a voice call), is received at an ingress ESS. Assuming that the called end point (Egress) also interfaces with an egress ESS, a similar IAM is received at the Egress as well (see Figure 4). The voice call in this example, at Ingress is allocated to a wavelength with sufficient capacity. A route is also determined so that the call can be routed to an Egress switch connected to a remote OXC/LR with specific service requirements of the voice call. The call flow for this simple example (excluding many details) is as shown in Fig. 4. Determining the wavelength at the Ingress OXC/LR for the voice call is performed by the ESS end-point application module in collaboration with OSM/ONN as shown in Fig, 4. Note that the call set up request from Ingress may or may not require setting up and/or switching a new wavelength at the Ingress/Egress OXC/ONNs and/or at the intermediate OXC/ONNs. When such end-end wavelengths are available (one wavelength or a concatenation of several tandem wavelengths), the Ingress and Egress ESS should decide whether the existing end-end optical channel can meet QOS for the new call.

Referring to Fig. 4, it can be seen that a decision about the wavelength onto which a voice call is allocated is made in conjunction with the OUNI messaging on the optical interface to OXC/ONN and with the OSM for determining the proper choice of wavelength (messages 1, 2, 4, 5, 6, 7,8,9,10). However, with the information from OSM, the specific wavelengths onto which the call is routed is available at the ESS. The call establishment process in this example is as follows:

As a result of a circuit switch receiving a call from an SS7 network, an IAM is sent to the Ingress ESS. This message is subsequently sent to the Egress ESS which is identified by the SS7 network. The Ingress ESS issues an OUNI message 1 to the Ingress OXC/ONN which subsequently queries the Ingress OSM (message 2). These messages are for inquiring about an available path as well as the required capacity between Ingress and Egress OXCs. Ingress OSM may also send messages to other OSMs (and/or OXCs) so that an appropriate path can be determined for the call (e.g., message 3). Message 1 could correspond to Connection_Create_Request in OUNI. Upon responses from the OXCs involved in the call establishment, through messages 8 and 9 identifying the appropriate wavelengths to be used, the remaining signaling messages are exchanged. At this point IAM is exchanged between Ingress and Egress ESSs. Messages 9 and 10 could correspond to Connection_Create_Request and Connection_Create_Response in OUNI. Upon completion of the path establishment, ACM messages are exchanged with the Ingress and Egress end points. The process of information exchange commences after the end points respond (ANM exchange).

As shown by this example for the case of circuit switch calls, since the ESS rather than the individual switching systems interact with the external signaling systems and the OXC/LR/OADM, etc., the independence of the interface will allow wide spread use of the ESS as a signaling platform for both optical and electronic switch calls. Similar signaling call flow can be defined for wavelength dialing" calls where an entire wavelength channel can be reserved for a call among end points. In the process of call establishment, if necessary, the end point ESS in conjunction with the OSM determines if the call should be allocated to a OVPN, ORPN, etc.

As the call flow shows, the signaling between OSM and OXC/ONN remains the same as it currently is. The signaling between external signaling systems and the ESS remains as is without the need for changes to the external signaling systems. It should be noted that while direct interface of switching systems with OXC/LR may require implementation of OUNI on the external switching system, the ESS approach does not. The legacy switch or router interfaces with the ESS using their current signaling protocols without additional developments. OUNI is only implemented at the ESS and at ONN.

The example also demonstrates the ability that can be extended to the service providers (e.g., through service providers' ESS) in control of both optical and electronic resources. For example, a call from an end point requiring certain QoS can be accordingly allocated to an appropriate wavelength path between Ingress and Egress switches/multiplexers/gateways. The monitoring of the various wavelengths at the OXC/LR/OADM is performed by the OSM and incorporated into the call acceptance/establishment process at ESS.

The ESS thus creates a signaling platform that is independent of the electronics and optical switching and transmission systems. The ESS provides the ultimate controllability on an end-end basis to a concatenation of optical and electronic systems by the service providers and end users. Since it allows control over the transport network resources by the end user and service providers, it accelerates the process of service creation and network service expansion. Since the ESS provides an end-end control over the connection, it allows total control of service requirements and QoS. Service providers can allocate transport network resources in a dynamic fashion independent of other network users (when dedicated wavelengths and resources are allocated), or in conjunction with other users when sharing of transport wavelengths is allowed.

By isolating the signaling and transport mechanisms and by providing a fabric-independent resource allocation platform, ESS offers the ultimate control over resources end-end in a cost effective manner over very short period of time. Benefits are that switching is totally independent of electronics and optical fabrics. There is no need to implement OUNI or other signaling protocols in the embedded base. Edge, access, and network control is performed solely by the service provider. In addition, the service provider is isolated from the details of backbone network technology, switching, and operational details. Implementation of the ESS also allows for dynamic and real-time rearrangement of VPNs.

The foregoing description merely illustrates the principles of the invention. It will thus be appreciated that those skilled in the art will be able to devise various arrangements, which, although not explicitly described or shown herein, embody the principles of the invention, and are included within its spirit and scope. Furthermore, all examples and conditional language recited are principally intended expressly to be only for instructive purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

In the claims hereof any element expressed as a means for performing a specified function is intended to encompass any way of performing that function including, for example, a) a combination of circuit elements which performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. Applicant thus regards any means which can provide those functionalities as equivalent as those shown herein. Many other modifications and applications of the principles of the invention will be apparent to those skilled in the art and are contemplated by the teachings herein. Accordingly, the scope of the invention is limited only by the claims.

## Claims

1. A system for providing signaling for switching and control of transmissions in an integrated optical network, said system comprising:
a signaling apparatus including,
a plurality of electrical signaling interfaces (302) for receiving requests from external signaling networks;
a processing module (312) for processing said requests from said external signaling networks; and
at least one optical signaling interface (306) for coupling to optical components in said integrated optical network, said optical signaling interface being operable to transmit processed requests from said processing module for assignment of optical channels in said optical components; and
an optical service node (210) including,
at least one optical cross connect "OXC"; and
at least one optical add/drop multiplexer "OADM", said OADM including electrical interfaces to circuit switched and packet switched fabrics, said OXC and OADM each including at least one interface to an optical network or other optical components,
said optical service node coupling to said signaling apparatus through said optical signaling interface, wherein signaling processed by said processing module from the external signaling networks is provided directly to the optical network components via said optical signaling interface.

2. The system of Claim 1, wherein said external signaling networks are selected from the group consisting of circuit switched signaling networks, packet switched signaling networks, SS7, H323, SIP and other enhanced signaling system "ESS" apparatus.

3. The system of Claim 1, wherein said processing module is a signaling and call control processor.

4. The system of Claim 3, further including a signaling and endpoint applications module (304) coupled to said processor module for providing electronic and optical routing decisions.

5. The system of Claim 4, further including a network management and provisioning module (308) for providing network management interaction for reporting of alarms and receiving commands for provisioning and reconfiguration of said apparatus.

6. The system of Claim 5, further including a system administration module (310) for providing an operator interface for administration and maintenance of said system.

7. The system of Claim 1, wherein said apparatus is operable to assign individual wavelengths in said optical components in accordance with requests from said external signaling networks and allocate calls to existing wavelengths.

## Patentansprüche

1. System zum Bereitstellen von Signalisierung zum Schalten und Steuern von Übertragungen in einem optischen integrierten Netz, wobei das System Folgendes aufweist:
eine Signalisierungsvorrichtung, aufweisend,
mehrere elektrische Signalisierungsschnittstellen (302) zum Empfangen von Anfragen von externen Signalisierungsnetzen;
ein Verarbeitungsmodul (312) zum Verarbeiten der Anfragen von den externen Signalisierungsnetzen; und
wenigstens eine optische Signalisierungsschnittstelle (306) zum Koppeln an optische Komponenten in dem optischen integrierten Netz, wobei die optische Signalisierungsschnittstelle bedienbar ist, um verarbeitete Anfragen von dem Verarbeitungsmodul zum Zuweisen von optischen Kanälen in den optischen Komponenten zu übertragen; und einen optischen Dienstknoten (210), aufweisend,
wenigstens einen optischen Kreuzvermittler "OXC"; und
wenigstens einen optischen Add/Drop-Multiplexer "OADM", wobei der OADM elektrische Schnittstellen zu leitungsvermittelten und paketvermittelten Schaltmatrizes aufweist, wobei der OXC und der OADM jeweils wenigstens eine Schnittstelle zu einem optischen Netz oder anderen optischen Komponenten aufweisen,
wobei der optische Dienstknoten über die optische Signalisierungsschnittstelle an die Signalisierungsvorrichtung gekoppelt ist, wobei Signalisierung von den externen Signalisierungsnetzen, die von dem Verarbeitungsmodul verarbeitet wurde, über die optische Signalisierungsschnittstelle direkt an die optischen Netzkomponenten bereitgestellt wird.

2. System nach Anspruch 1, wobei die externen Signalisierungsnetze aus der Gruppe ausgewählt sind, die aus leitungsvermittelten Signalisierungsnetzen, paketvermittelten Signalisierungsnetzen, SS7, H323, SIP und anderen verstärkten Signalisierungssystem-("ESS")-Vorrichtungen besteht.

3. System nach Anspruch 1, wobei das Verarbeitungsmodul ein Signalisierungs- und Verbindungssteuerungsprozessor ist.

4. System nach Anspruch 3, das außerdem ein Signalisierungs- und Endknotenapplikationsmodul (304) aufweist, das zum Bereitstellen von elektronischen und optischen Leitwegentscheidungen an das Verarbeitungsmodul gekoppelt ist.

5. System nach Anspruch 4, das außerdem ein Netzverwaltungs- und Bereitstellungsmodul (308) zum Bereitstellen von Netzverwaltungsinteraktion für das Melden von Alarmen und das Empfangen von Befehlen zum Bereitstellen und Rekonfigurieren der Vorrichtung aufweist.

6. System nach Anspruch 5, das außerdem ein Systemverwaltungsmodul (310) zum Bereitstellen einer Benutzeroberfläche zum Verwalten und Warten des Systems aufweist.

7. System nach Anspruch 1, wobei die Vorrichtung bedienbar ist, um gemäß Anfragen von den externen Signalisierungsnetzen individuelle Wellenlängen in den optischen Komponenten zuzuweisen und um Anrufe bestehenden Wellenlängen zuzuteilen.

## Revendications

1. Système de fourniture d'une signalisation pour la commutation et la commande de transmissions dans un réseau optique intégré, ledit système comprenant :
un appareil de signalisation comprenant,
une pluralité d'interfaces de signalisation électriques (302) pour recevoir des demandes provenant de réseaux de signalisation externes ;
un module de traitement (312) pour traiter lesdites demandes provenant desdits réseaux de signalisation externes ; et
au moins une interface de signalisation optique (306) pour se coupler à des composants optiques dans ledit réseau optique intégré, ladite interface de signalisation optique étant opérationnelle pour transmettre des demandes traitées provenant dudit module de traitement pour une attribution de canaux optiques dans lesdits composants optiques ; et
un noeud de service optique (210) comprenant,
au moins un répartiteur optique « OXC »; et
au moins un multiplexeur d'insertion-extraction optique «OADM», ledit OADM comprenant des interfaces électriques sur des matrices commutées par circuit et commutées par paquet, lesdits OXC et OADM comprenant chacun au moins une interface sur un réseau optique ou d'autres composants optiques,
ledit noeud de service optique se couplant audit appareil de signalisation grâce à ladite interface de signalisation optique, dans lequel la signalisation traitée par ledit module de traitement provenant des réseaux de signalisation externes est fournie directement aux composants de réseaux optiques par l'intermédiaire de ladite interface de signalisation optique.

2. Système selon la revendication 1, dans lequel lesdits réseaux de signalisation externes sont sélectionnés parmi le groupe consistant en des réseaux de signalisation commutés par circuit, des réseaux de signalisation commutés par paquet, SS7, H323, SIP et autre appareil « ESS » de système de signalisation amélioré.

3. Système selon la revendication 1, dans lequel ledit module de traitement est un processeur de commande d'appel et de signalisation.

4. Système selon la revendication 3, comprenant en outre un module d'applications de point d'extrémité et de signalisation (304) couplé audit module de processeur pour fournir des décisions d'acheminements optiques et électroniques.

5. Système selon la revendication 4, comprenant en outre un module de fourniture et de gestion de réseau (308) pour fournir une interaction de gestion de réseau afin de signaler des alarmes et recevoir des commandes pour la fourniture et la reconfiguration dudit appareil.

6. Système selon la revendication 5, comprenant en outre un module d'administration de système (310) afin de fournir une interface d'opérateur pour l'administration et la maintenance dudit système.

7. Système selon la revendication 1, dans lequel ledit appareil est opérationnel pour attribuer des longueurs d'onde individuelles dans lesdits composants optiques en accord avec des demandes provenant desdits réseaux de signalisation externes et affecter des appels à des longueurs d'onde existantes.
